# EUROPEAN PATENT APPLICATION

(11) **EP 3 429 287 A1**
(43) Date of publication of application: **16.01.2019**
(21) Application number: 16893307.5
(22) Date of filing: 25.11.2016
(51) Int. Cl.: H04W 72/04, H04L 5/00

(54) **METHOD AND DEVICE FOR TRANSMITTING UPLINK FEEDBACK INFORMATION**

(30) Priority: 09.03.2016 CN 201610133814
(71) Applicant: ZTE Corporation, Shenzhen, Guangdong 518057 (CN)
(72) Inventor: YANG, Li, Shenzhen Guangdong 518057 (CN); GOU, Wei, Shenzhen Guangdong 518057 (CN); ZHAO, Yajun, Shenzhen Guangdong 518057 (CN)
(74) Representative: Lavoix
(86) International application number: PCT/CN2016/107327
(87) International publication number: WO 2017/152664

(57) **Abstract**

The present invention provides a method and device for transmitting uplink feedback information. The method comprises: receiving configuration information sent by a base station, the configuration information comprising transmission time-frequency location information of multiple uplink candidate subframes over an unlicensed carrier, and the multiple uplink candidate subframes being used for sending multiple pieces of uplink control information (UCI); and receiving a downlink data block over the unlicensed carrier and transmitting UCI corresponding to the downlink data block over the multiple uplink candidate subframes. The technical solution solves the problem that uplink feedback of UCI may not be sent over an unlicensed carrier in time due to failure of an LBT operation, so that the transmission efficiency of downlink data of an LTE system over the unlicensed carrier is improved.

## Description

### TECHNICAL FIELD

The disclosure relates to the field of communications, and in particular to a method and device for transmitting uplink feedback information.

### BACKGROUND

In the related art, a communication network of Long Term Evolution (LTE) is deployed on a licensed carrier to work and operate. With the development of LTE, some companies have proposed "project about recommended research on LTE deployment in unlicensed carriers". For example, Qualcomm believes that with the rapid growth of data services, in the near future, resources of licensed carriers will not be able to withstand the huge amount of data brought by rapid service growth. Considering that an LTE serving cell is deployed on an unlicensed carrier to share the data traffic in a licensed carrier, the data volume pressure brought by the service growth can be solved. This is an Enhanced Licensed Assisted Access (eLAA) technology that is being researched and made by the 3rd Generation Partnership Project (3GPP) standard organization.

The unlicensed carrier has the following characteristics: on the one hand, since the unlicensed carrier does not require an operator to bid, or the carrier resource is zero cost, the unlicensed carrier can be utilized for free or with low cost; on the other hand, since both the individual and the enterprise can participate in the deployment of related network devices, the admission conditions of the unlicensed carrier are low; in addition, the unlicensed carrier is fair and shareable, and when being shared and operated therein by different systems or different operators of the same system, the utilization efficiency of carrier resources can be improved.

In summary, although the LTE technology has obvious commercial advantages in deployment on unlicensed carriers, there are still problems in the process of deployment and operation. There are many types of wireless access technologies (communication standards crossing different systems, difficult collaboration between wireless nodes, and diverse network topology), and there are many wireless access stations (large number of users, difficult collaboration, and large centralized management overhead). Therefore, for LTE deployment on unlicensed carriers, it is necessary to support regulations used by the unlicensed carriers. Most countries require any communication system to support a basic mechanism of Listen Before Talk (LBT) when being deployed on an unlicensed carrier. By LBT, it is possible to avoid interference and collision between adjacent wireless systems by simultaneously using local unlicensed carrier resources. Moreover, in order to further reduce the probability of collision interference, a random contention back-off mechanism is introduced, that is, a neighboring system station (generally a neighboring transmission node of the same system) can avoid interference between neighboring transmission nodes of the same system by simultaneously using unlicensed carriers through the contention back-off mechanism. Regulations: Any device that uses unlicensed carrier resources (including an LTE base station and a User Equipment (UE)) needs to perform LBT operation (i.e., Clear Channel Assessment (CCA)) before sending. When the channel is idle, the device can use the unlicensed carrier channel to send data for a period of time. For example, if an eNB succeeds in LBT operation and preempts an unlicensed carrier channel, downlink data can be sent, and if a UE succeeds in LBT operation and preempts an unlicensed carrier channel, uplink data can be sent. The content sent here may be either a user service data block or control information.

In an LTE system, the UE needs to perform acknowledge (ACK) or Negative Acknowledge (NACK) for a relevant data block sent from the eNB during data sending, and also needs to feed back Channel State Information (CSI) within the past period of time to assist the eNB in future data scheduling (re)transmission. Uplink Control Information (UCI) uplinked by the UE is corresponding to one or more downlink subframes. The UCI may be uplinked through a Physical Uplink Shared Channel (PUSCH) or a Physical Uplink Control Channel (PUCCH). For example, the base station sends a downlink data block in a Physical Downlink Shared Channel (PDSCH) corresponding to a downlink subframe n. After receiving and parsing, the UE needs to send UCI to the base station on a specific physical resource block of the PUSCH or the PUCCH corresponding to an uplink subframe n+4.

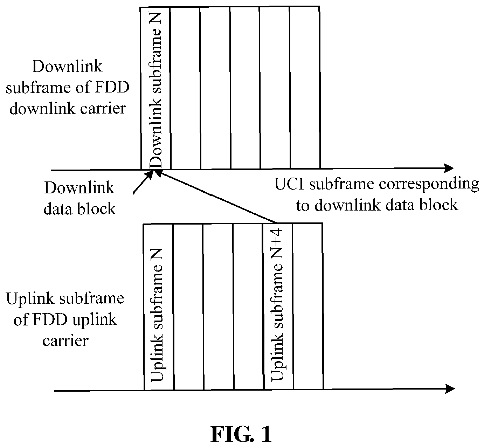

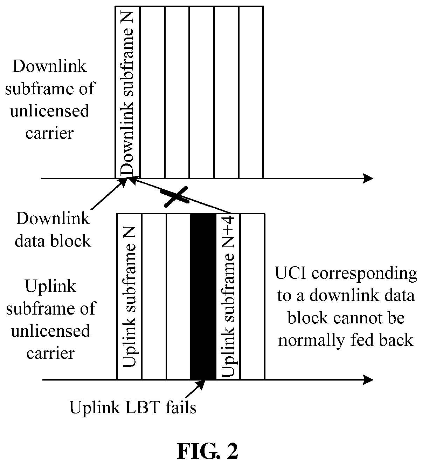

In LTE, the UE sends an uplink subframe position of the UCI feedback in a synchronous manner, and maintains an agreed subframe spacing relationship with a subframe position of the corresponding downlink data block sent from the base station. For example, under a Frequency Division Duplex (FDD), it is a fixed subframe spacing relationship of n+4 (the length of each subframe of LTE is 1ms); under a Time Division Duplex (TDD), it is necessary to configure according to specific uplink and downlink subframes of the TDD, and a standardized table can also determine an agreed subframe spacing relationship for n+x. The fixed subframe spacing relationship is easily implemented on the licensed carrier. Because the uplink and downlink channel resources of the licensed carrier are completely scheduled and controlled by the eNB, the eNB and the UE can ensure that the relevant information is sent at the agreed subframe position. FIG. 1 is a schematic diagram of downlink scheduling transmission and uplink feedback of an LTE FDD system in the related art. As shown in FIG. 1, when the base station sends a downlink data block to the UE in a subframe n, the UE needs to uplink UCI feedback information in the agreed subframe n+4 after receiving and parsing the data block. However, the above UCI feedback operation has the following problem for the unlicensed carrier: FIG. 2 is a schematic diagram of downlink scheduling transmission and uplink feedback of an LAA system in the related art. As shown in FIG. 1, when the base station sends a downlink data block to the UE in a subframe n, the UE also needs to send UCI in the uplink in a subframe n+4 after receiving and parsing the data block. However, before the subframe n+4 arrives, the UE needs to perform LBT operation namely CCA detection because of the LBT regulation requirement on the unlicensed carrier. When it is detected that the unlicensed carrier channel is idle (energy in the detection channel is lower than a preset threshold), the UE can use the subframe n+4 to send the UCI. When it is detected that the channel is non-idle (busy), the UE cannot use the subframe n+4 to send the UCI. Therefore, when the latter occurs, the UE will not be able to send UCI feedback information in the subframe position agreed with the base station, and the eNB cannot know the downlink data sending status of the data block in the subframe n and the CSI measurement information in the past period of time, which cannot further accurately perform downlink data scheduling.

For the problem in the related art that uplink feedback of UCI may not be sent on an unlicensed carrier in time due to failure of an LBT operation, there is currently no effective solution.

### SUMMARY

The embodiment of the disclosure provides a method and device for transmitting uplink feedback information, intended to at least solve the problem in the related art that uplink feedback of UCI may not be sent on an unlicensed carrier in time due to failure of an LBT operation.

According to an aspect of the embodiment of the disclosure, a method for transmitting uplink feedback information is provided. The method includes the following operations.

Configuration information sent from a base station is received, the configuration information including sending time-frequency position information of multiple uplink candidate subframes on an unlicensed carrier, and the multiple uplink candidate subframes being used for sending multiple pieces of UCI.

A downlink data block on the unlicensed carrier is received, and UCI corresponding to the downlink data block is sent on the multiple uplink candidate subframes.

Alternatively, the sending time-frequency position information of the multiple uplink candidate subframes includes: spacing information of the multiple candidate subframes, the spacing information including a number of spacing uplink subframes, and the spacing information indicating a time dimension spacing between an uplink sending time of the UCI and a receiving time of the downlink data block.

Alternatively, in the presence of multiple activated unlicensed carriers, the sending time-frequency position information of the multiple uplink candidate subframes includes spacing information and frequency information of the multiple candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

Alternatively, the operation that UCI corresponding to the downlink data block is sent on the multiple uplink candidate subframes includes that:
UCI corresponding to the downlink data block is preferentially uplinked on an uplink candidate subframe that is in a same frequency as the downlink data block; and
in the case when UCI corresponding to the downlink data block cannot be uplinked on an uplink candidate subframe that is in a same frequency as the downlink data block after the attempt due to failure of LBT, the UCI corresponding to the downlink data block is uplinked on an uplink candidate subframe that is in the different frequency from the downlink data block.

Alternatively, the UCI corresponding to the downlink data block attempts to be sent on one of the multiple uplink candidate subframes, and after the UCI is successfully sent on the uplink candidate subframe, the UCI is not required to be repeatedly send on uplink candidate subframes among the configured multiple uplink candidate subframes other than the uplink candidate subframe on which the UCI is successfully sent.

Alternatively, after a downlink data block on the unlicensed carrier is received, the method further includes the following operation.

Joint feedback UCI associated with the multiple downlink data blocks is uplinked on the multiple uplink candidate subframes simultaneously, the joint feedback UCI including: joint feedback information indicating whether the multiple downlink data blocks are successfully received, and CSI associated with an observation time window for channel reception corresponding to the multiple downlink data blocks.

Alternatively, after an attempt of sending first one or more pieces of UCI of the UCI corresponding to the multiple downlink data blocks fails due to a failure of Listen Before Talk, LBT, a subsequent UCI of the first one or more pieces of UCI is jointly uplinked as s the joint feedback UCI, and the joint feedback UCI carries information of the first one or more pieces of UCI, herein a coding mode of the joint feedback UCI including multiple pieces of UCI is a carrier aggregation joint UCI coding mode.

Alternatively, in the case when the feedback information of the joint feedback UCI exceeds a capacity of an uplink subframe where the joint feedback UCI is located, the joint feedback UCI carries one or more pieces of UCI corresponding to recently received one or more downlink data blocks, and UCI corresponding to downlink data blocks other than the recently received one or more downlink data blocks is discarded.

Alternatively, the configuration information is carried in a specific Radio Resource Control (RRC) message or an RRC message broadcast by the system.

According to another aspect of the embodiment of the disclosure, a method for transmitting uplink feedback information is also provided. The method includes the following operations.

Configuration information is sent to a terminal, the configuration information including sending time-frequency position information of multiple uplink candidate subframes on an unlicensed carrier, and the multiple uplink candidate subframes being used for sending multiple pieces of UCI.

A downlink data block on the unlicensed carrier is sent to the terminal.

UCI corresponding to the downlink data block is received on the multiple uplink candidate subframes.

Alternatively, the sending time-frequency position information of the multiple uplink candidate subframes includes: spacing information of the multiple uplink candidate subframes, the spacing information including a number of spacing uplink subframes, and the spacing information indicating a time dimension spacing between an uplink sending time of the UCI and a receiving time of the downlink data block.

Alternatively, in the presence of multiple activated unlicensed carriers, the sending time-frequency position information of the multiple uplink candidate subframes includes spacing information and frequency information of the multiple uplink candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

Alternatively, the operation that configuration information is sent to a terminal includes that:
the configuration information is sent to the terminal by a specific RRC message or an RRC message broadcast by a system.

Alternatively, the operation that UCI corresponding to the downlink data block is received includes that:
the UCI corresponding to the downlink data block is received on one of the multiple uplink candidate subframes, and UCI of candidate subframes among the plurality of uplink candidate subframes other than said one uplink candidate subframe is determined according to UCI of said one uplink candidate subframe and sending time-frequency position information of the multiple uplink candidate subframes, herein the determined UCI carries joint feedback UCI associated with the multiple downlink data blocks.

Alternatively, after joint feedback UCI associated with the multiple downlink data blocks is received on the multiple candidate subframes, UCI associated with each downlink data block in the joint feedback UCI is derived according to physical layer control information, the UCI of each data block including: information indicating whether the downlink data block is successfully received, and CSI of an observation time window for channel reception corresponding to the downlink data block.

According to another aspect of the embodiment of the disclosure, a device for transmitting uplink feedback information is also provided. The device is located in a terminal and includes a first receiving module, a second receiving module and a first sending module.

The first receiving module is configured to receive configuration information sent from a base station. The configuration information includes sending time-frequency position information of multiple uplink candidate subframes on an unlicensed carrier, and the multiple uplink candidate subframes is used for sending multiple pieces of UCI.

The second receiving module is configured to receive a downlink data block on the unlicensed carrier.

The first sending module is configured to uplink UCI corresponding to the downlink data block on the multiple uplink candidate subframes.

Alternatively, the sending time-frequency position information of the multiple uplink candidate subframes includes: spacing information of the multiple candidate subframes, the spacing information including a number of spacing uplink subframes, and the spacing information indicating a time dimension spacing between an uplink sending time of the UCI and a receiving time of the downlink data block.

Alternatively, in the presence of multiple activated unlicensed carriers, the sending time-frequency position information of the multiple uplink candidate subframes includes spacing information and frequency information of the multiple candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

Alternatively, the first sending module is further configured to the uplink UCI corresponding to the downlink data block preferentially on an uplink candidate subframe that is in a same frequency as the downlink data block.

The first sending module is further configured to, in the case when UCI corresponding to the downlink data block cannot be uplinked on an uplink candidate subframe that is in a same frequency as the downlink data block after the attempt due to failure of LBT, uplink the UCI corresponding to the downlink data block on an uplink candidate subframe that is in the different frequency from the downlink data block.

Alternatively, the first sending module is further configured to attempt to send the UCI corresponding to the downlink data block on one of the multiple uplink candidate subframes, herein after the UCI is successfully sent on the uplink candidate subframe, the UCI is not required to be repeatedly send on uplink candidate subframes among the configured multiple uplink candidate subframes other than the uplink candidate subframe on which the UCI is successfully sent.

Alternatively, the first sending module is further configured to uplink joint feedback UCI associated with the multiple downlink data blocks on the multiple uplink candidate subframes simultaneously, the joint feedback UCI including: joint feedback information indicating whether the multiple downlink data blocks are successfully received, and CSI associated with an observation time window for channel reception corresponding to the multiple downlink data blocks.

Alternatively, the first sending module is further configured to, after an attempt of sending first one or more pieces of UCI of the UCI corresponding to the multiple downlink data blocks fails due to a failure of LBT, allow a subsequent UCI of the first one or more pieces of UCI to be jointly uplinked as the joint feedback UCI, the joint feedback UCI carrying information of the first one or more pieces of UCI, herein a coding mode of the joint feedback UCI including multiple pieces of UCI is a carrier aggregation joint UCI coding mode.

Alternatively, in the case when the feedback information of the joint feedback UCI exceeds a capacity of an uplink subframe where the joint feedback UCI is located, the joint feedback UCI carries one or more pieces of UCI corresponding to recently received one or more downlink data block, and UCI corresponding to downlink data blocks other than the recently received one or more downlink data blocks is automatically discarded.

Alternatively, the configuration information is carried in a specific RRC message or an RRC message broadcast by the system.

According to another aspect of the embodiment of the disclosure, a device for transmitting uplink feedback information is also provided. The device is located in a base station and includes a second sending module, a third sending module and a third receiving module.

The second sending module is configured to send configuration information to a terminal. The configuration information includes sending time-frequency position information of multiple uplink candidate subframes on an unlicensed carrier, and the multiple uplink candidate subframes is used for sending multiple pieces of UCI.

The third sending module is configured to send a downlink data block on the unlicensed carrier to the terminal.

The third receiving module is configured to receive UCI corresponding to the downlink data block on the multiple uplink candidate subframes.

Alternatively, the sending time-frequency position information of the multiple uplink candidate subframes includes: spacing information of the multiple uplink candidate subframes, the spacing information including a number of spacing uplink subframes, and the spacing information indicating a time dimension spacing between an uplink sending time of the UCI and a receiving time of the downlink data block.

Alternatively, in the presence of multiple activated unlicensed carriers, the sending time-frequency position information of the multiple uplink candidate subframes includes spacing information and frequency information of the multiple uplink candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

Alternatively, the operation that configuration information is sent to a terminal includes the following operation.

The configuration information is sent to the terminal by a specific RRC message or an RRC message broadcast by a system.

Alternatively, the third receiving module is further configured to receive the UCI corresponding to the downlink data block on one of the multiple uplink candidate subframes, and determine UCI of candidate subframes among the plurality of uplink candidate subframes other than said one uplink candidate subframe according to UCI of said one uplink candidate subframe and sending time-frequency position information of the multiple uplink candidate subframes, the determined UCI carrying joint feedback UCI associated with the multiple downlink data blocks.

Alternatively, after joint feedback UCI associated with the multiple downlink data blocks is received on the multiple candidate subframes, UCI associated with each downlink data block in the joint feedback UCI is derived according to physical layer control information, the UCI of each data block including: information indicating whether the downlink data block is successfully received, and CSI of an observation time window for channel reception corresponding to the downlink data block.

According to another embodiment of the disclosure, a storage medium is also provided. The storage medium is configured to store a program code for performing the operations as follows.

Configuration information sent from a base station is received, the configuration information including sending time-frequency position information of multiple uplink candidate subframes on an unlicensed carrier, and the multiple uplink candidate subframes being used for sending multiple pieces of UCI; and a downlink data block on the unlicensed carrier is received, and UCI corresponding to the downlink data block is sent on the multiple uplink candidate subframes.

According to another embodiment of the disclosure, a storage medium is also provided. The storage medium is configured to store a program code for performing the operations as follows.

Configuration information is sent to a terminal, the configuration information including sending time-frequency position information of multiple uplink candidate subframes on an unlicensed carrier, and the multiple uplink candidate subframes being used for sending multiple pieces of UCI; a downlink data block on the unlicensed carrier is sent to the terminal; and UCI corresponding to the downlink data block is received on the multiple uplink candidate subframes.

By means of the embodiment of the disclosure, configuration information sent from a base station is received, the configuration information including sending time-frequency position information of multiple uplink candidate subframes on an unlicensed carrier, and the multiple uplink candidate subframes being used for sending multiple pieces of UCI; and a downlink data block on the unlicensed carrier is received, and UCI corresponding to the downlink data block is sent on the multiple uplink candidate subframes. The problem that uplink feedback of UCI may not be sent on an unlicensed carrier in time due to failure of an LBT operation is solved, so that the transmission efficiency of downlink data of an LTE system on the unlicensed carrier is improved.

### BRIEF DESCRIPTION OF DRAWINGS

The drawings illustrated herein are intended to provide a further understanding for the disclosure, and form a part of the present application. The schematic embodiments and illustrations of the disclosure are intended to explain the disclosure, and do not form improper limits to the disclosure. In the drawings:
FIG. 1 is a schematic diagram of downlink scheduling transmission and uplink feedback of an LTE FDD system in the related art.
FIG. 2 is a schematic diagram of downlink scheduling transmission and uplink feedback of an LAA system in the related art.
FIG. 3 is a first flowchart of a method for transmitting uplink feedback information according to an embodiment of the disclosure.
FIG. 4 is a second flowchart of a method for transmitting uplink feedback information according to an embodiment of the disclosure.
FIG. 5 is a first block diagram of a device for transmitting uplink feedback information according to an embodiment of the disclosure.
FIG. 6 is a second block diagram of a device for transmitting uplink feedback information according to an embodiment of the disclosure.
FIG. 7 is a schematic diagram of downlink scheduling transmission and enhanced same-frequency uplink feedback of an LAA system according to a preferred embodiment of the disclosure.
FIG. 8 is a schematic diagram of downlink scheduling transmission and enhanced multi-frequency uplink feedback of an LAA system according to a preferred embodiment of the disclosure.
FIG. 9 is a deployment schematic diagram of a single LAA Scell on a Pcell+unlicensed carrier on an LAA licensed carrier according to a preferred embodiment of the disclosure.
FIG. 10 is a schematic diagram of downlink scheduling transmission and uplink feedback of an LAA system according to a first preferred embodiment of the disclosure.
FIG. 11 is a first deployment schematic diagram of two LAA Scells on a Pcell+unlicensed carrier on an LAA licensed carrier according to a preferred embodiment of the disclosure.
FIG. 12 is a schematic diagram of downlink scheduling transmission and uplink feedback of an LAA system according to a second preferred embodiment of the disclosure.
FIG. 13 is a second deployment schematic diagram of two LAA Scells on a Pcell+unlicensed carrier on an LAA licensed carrier according to a preferred embodiment of the disclosure.
FIG. 14 is a schematic diagram of downlink scheduling transmission and uplink feedback of an LAA system according to a third preferred embodiment of the disclosure.

### DETAILED DESCRIPTION

The disclosure will be described in detail below with reference to the drawings in conjunction with the embodiments. It is to be noted that the embodiments of the present application and the features in the embodiments may be combined with each other without conflict.

It is to be noted that the terms "first", "second", and the like in the specification and claims of the disclosure are used to distinguish similar objects, and are not necessarily used to describe a particular order or order.

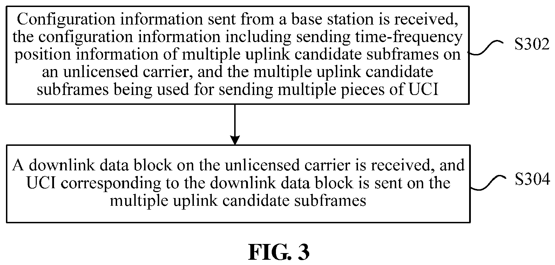

A method for transmitting uplink feedback information is provided in the present embodiment. FIG. 3 is a first flowchart of a method for transmitting uplink feedback information according to an embodiment of the disclosure. As shown in FIG. 3, the flow includes the operations as follows.

At operation S302, configuration information sent from a base station is received, the configuration information including sending time-frequency position information of multiple uplink candidate subframes on an unlicensed carrier, and the multiple uplink candidate subframes being used for sending multiple pieces of UCI.

At operation S304, a downlink data block on the unlicensed carrier is received, and UCI corresponding to the downlink data block is sent on the multiple uplink candidate subframes.

By means of the above operations, configuration information sent from a base station is received, the configuration information including sending time-frequency position information of multiple uplink candidate subframes on an unlicensed carrier, and the multiple uplink candidate subframes being used for sending multiple pieces of UCI; and a downlink data block on the unlicensed carrier is received, and UCI corresponding to the downlink data block is sent on the multiple uplink candidate subframes. The problem that uplink feedback of UCI may not be sent on an unlicensed carrier in time due to failure of an LBT operation is solved, so that the transmission efficiency of downlink data of an LTE system on the unlicensed carrier is improved.

In the embodiment of the disclosure, the sending time-frequency position information of the multiple uplink candidate subframes includes: spacing information of the multiple candidate subframes, the spacing information including a number of spacing uplink subframes, and the spacing information indicating a time dimension spacing between an uplink sending time of the UCI and a receiving time of the downlink data block.

In the embodiment of the disclosure, in the presence of multiple activated unlicensed carriers, the sending time-frequency position information of the multiple uplink candidate subframes includes spacing information and frequency information of the multiple uplink candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

In the embodiment of the disclosure, the operation that UCI corresponding to the downlink data block is sent on the multiple uplink candidate subframes includes the operations as follows.

UCI corresponding to the downlink data block is uplinked preferentially on an uplink candidate subframe that is in a same frequency as the downlink data block.

In the case when UCI corresponding to the downlink data block cannot be uplinked on an uplink candidate subframe that is in a same frequency as the downlink data block after the attempt due to failure of LBT, the UCI corresponding to the downlink data block is uplinked on an uplink candidate subframe that is in the different frequency from the downlink data block.

In the embodiment of the disclosure, the UCI corresponding to the downlink data block attempts to be sent on one of the multiple uplink candidate subframes, herein after the UCI is successfully sent on the uplink candidate subframe, the UCI is not required to be repeatedly send on uplink candidate subframes among the configured plurality of uplink candidate subframes other than the uplink candidate subframe on which the UCI is successfully sent.

In the embodiment of the disclosure, after a downlink data block on the unlicensed carrier is received, the method further includes the following operation.

Joint feedback UCI associated with the multiple downlink data blocks is uplinked on the multiple uplink candidate subframes simultaneously, the joint feedback UCI including: joint feedback information indicating whether the multiple downlink data blocks are successfully received, and CSI associated with an observation time window for channel reception corresponding to the multiple downlink data blocks.

In the embodiment of the disclosure, after an attempt of sending first one or more pieces of UCI of the UCI corresponding to the multiple downlink data blocks fails due to a failure of LBT, a subsequent UCI of the first one or more pieces of UCI is jointly uplinked as the joint feedback UCI, and the joint feedback UCI carries information of the first one or more pieces of UCI, herein a coding mode of the joint feedback UCI including multiple pieces of UCI is a carrier aggregation joint UCI coding mode.

In the embodiment of the disclosure, in the case when the feedback information of the joint feedback UCI exceeds a capacity of an uplink subframe where the joint feedback UCI is located, the joint feedback UCI carries one or more pieces of UCI corresponding to recently received one or more downlink data blocks, and UCI corresponding to downlink data blocks other than the recently received one or more downlink data blocks is discarded.

In the embodiment of the disclosure, the configuration information is carried in a specific RRC message or an RRC message broadcast by the system.

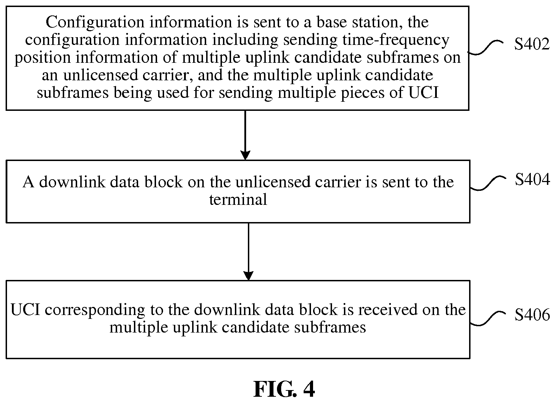

A method for transmitting uplink feedback information is provided in the present embodiment. FIG. 4 is a second flowchart of a method for transmitting uplink feedback information according to an embodiment of the disclosure. As shown in FIG. 4, the flow includes the operations as follows.

At operation S402, configuration information is sent to a base station, the configuration information including sending time-frequency position information of multiple uplink candidate subframes on an unlicensed carrier, and the multiple uplink candidate subframes being used for sending multiple pieces of UCI.

At operation S404, a downlink data block on the unlicensed carrier is sent to the terminal.

At operation S406, UCI corresponding to the downlink data block is received on the multiple uplink candidate subframes.

By means of the above operations, configuration information is sent to a base station, the configuration information including sending time-frequency position information of multiple uplink candidate subframes on an unlicensed carrier, and the multiple uplink candidate subframes being used for sending multiple pieces of UCI; and a downlink data block on the unlicensed carrier is sent to the terminal, and UCI corresponding to the downlink data block is received on the multiple uplink candidate subframes. The problem that uplink feedback of UCI may not be sent on an unlicensed carrier in time due to failure of an LBT operation is solved, so that the transmission efficiency of downlink data of an LTE system on the unlicensed carrier is improved.

In the embodiment of the disclosure, the sending time-frequency position information of the multiple uplink candidate subframes includes: spacing information of the multiple uplink candidate subframes, the spacing information including a number of spacing uplink subframes, and the spacing information indicating a time dimension spacing between an uplink sending time of the UCI and a receiving time of the downlink data block.

In the embodiment of the disclosure, in the presence of multiple activated unlicensed carriers, the sending time-frequency position information of the multiple uplink candidate subframes includes spacing information and frequency information of the multiple uplink candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

In the embodiment of the disclosure, the operation that configuration information is sent to a terminal includes the operation as follows.

The configuration information is sent to the terminal by a specific RRC message or an RRC message broadcast by a system.

In the embodiment of the disclosure, the operation that UCI corresponding to the downlink data block is received includes the operations as follows.

UCI corresponding to the downlink data block is received on one of the multiple uplink candidate subframes, and UCI of candidate subframes among the plurality of uplink candidate subframes other than said one uplink candidate subframe is determined according to UCI of said one uplink candidate subframe and sending time-frequency position information of the multiple uplink candidate subframes, the determined UCI carrying joint feedback UCI associated with the multiple downlink data blocks.

In the embodiment of the disclosure, after joint feedback UCI associated with the multiple downlink data blocks is received on the multiple candidate subframes, UCI associated with each downlink data block in the joint feedback UCI is derived according to physical layer control information, the UCI of each data block including: information indicating whether the downlink data block is successfully received, and CSI of an observation time window for channel reception corresponding to the downlink data block.

In the present embodiment, a device for transmitting uplink feedback information is also provided. The device is configured to implement the foregoing embodiments and the preferred implementation manners, and details are not described herein. As used below, the term "module" may implement a combination of software and/or hardware of a predetermined function. Although the device described in the following embodiments is preferably implemented in software. However, implementation in hardware or a combination of software and hardware is also possible and contemplated.

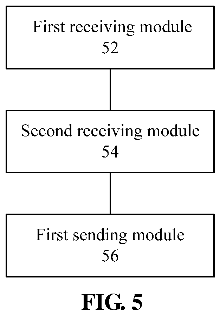

FIG. 5 is a first block diagram of a device for transmitting uplink feedback information according to an embodiment of the disclosure. The device is located in a terminal. As shown in FIG. 5, the device includes a first receiving module 52, a second receiving module 54 and a first sending module 56.

The first receiving module 52 is configured to receive configuration information sent from a base station, the configuration information including sending time-frequency position information of multiple uplink candidate subframes on an unlicensed carrier, and the multiple uplink candidate subframes being used for sending multiple pieces of UCI.

The second receiving module 54 is configured to receive a downlink data block on the unlicensed carrier.

The first sending module 56 is configured to uplink UCI corresponding to the downlink data block on the multiple uplink candidate subframes.

By means of the above device, the first receiving module 52 is configured to receive configuration information sent from a base station, the configuration information including sending time-frequency position information of multiple uplink candidate subframes on an unlicensed carrier, and the multiple uplink candidate subframes being used for sending multiple pieces of UCI; the second receiving module 54 is configured to receive a downlink data block on the unlicensed carrier; and the first sending module 56 is configured to the uplink UCI corresponding to the downlink data block on the multiple uplink candidate subframes. The problem that uplink feedback of UCI may not be sent on an unlicensed carrier in time due to failure of an LBT operation is solved, so that the transmission efficiency of downlink data of an LTE system on the unlicensed carrier is improved.

In the embodiment of the disclosure, the sending time-frequency position information of the multiple uplink candidate subframes includes: spacing information of the multiple candidate subframes, the spacing information including a number of spacing uplink subframes, and the spacing information indicating a time dimension spacing between an uplink sending time of the UCI and a receiving time of the downlink data block.

In the embodiment of the disclosure, in the presence of multiple activated unlicensed carriers, the sending time-frequency position information of the multiple uplink candidate subframes includes spacing information and frequency information of the multiple uplink candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

In the embodiment of the disclosure, the first sending module 56 is further configured to uplink the UCI corresponding to the downlink data block preferentially on an uplink candidate subframe that is in a same frequency as the downlink data block.

The first sending module 56 is further configured to, in the case when UCI corresponding to the downlink data block cannot be uplinked on an uplink candidate subframe that is in a same frequency as the downlink data block after the attempt due to failure of LBT, uplink the UCI corresponding to the downlink data block on an uplink candidate subframe that is in the different frequency from the downlink data block.

In the embodiment of the disclosure, the first sending module 56 is further configured to attempt to send the UCI corresponding to the downlink data block on one of the multiple uplink candidate subframes, herein after the UCI is successfully sent on the uplink candidate subframe, the UCI is not required to be repeatedly send on uplink candidate subframes among the configured plurality of uplink candidate subframes other than the uplink candidate subframe on which the UCI is successfully sent.

In the embodiment of the disclosure, the first sending module 56 is further configured to uplink joint feedback UCI associated with the multiple downlink data blocks on the multiple uplink candidate subframes simultaneously, the joint feedback UCI including: joint feedback information indicating whether the multiple downlink data blocks are successfully received, and CSI associated with an observation time window for channel reception corresponding to the multiple downlink data blocks.

In the embodiment of the disclosure, the first sending module 56 is further configured to, after an attempt of sending first one or more pieces of UCI of the UCI corresponding to the multiple downlink data blocks fails due to a failure of LBT, allow a subsequent UCI of the first one or more pieces of UCI to be jointly uplinked as the joint feedback UCI, the joint feedback UCI carrying information of the first one or more pieces of UCI, herein a coding mode of the joint feedback UCI including multiple pieces of UCI is a carrier aggregation joint UCI coding mode.

In the embodiment of the disclosure, in the case when the feedback information of the joint feedback UCI exceeds a capacity of an uplink subframe where the joint feedback UCI is located, the joint feedback UCI carries one or more pieces of UCI corresponding to recently received one or more downlink data blocks, and UCI corresponding to downlink data blocks other than the recently received one or more downlink data blocks is automatically discarded.

In the embodiment of the disclosure, the configuration information is carried in a specific RRC message or an RRC message broadcast by the system.

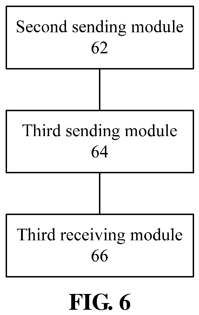

FIG. 6 is a second block diagram of a device for transmitting uplink feedback information according to an embodiment of the disclosure. The device is located in a base station. As shown in FIG. 6, the device includes a second sending module 62, a third sending module 64 and a third receiving module 66.

The second sending module 62 is configured to send configuration information to a terminal, the configuration information including sending time-frequency position information of multiple uplink candidate subframes on an unlicensed carrier, and the multiple uplink candidate subframes being used for sending multiple pieces of UCI.

The third sending module 64 is configured to send a downlink data block on the unlicensed carrier to the terminal.

The third receiving module 66 is configured to receive UCI corresponding to the downlink data block on the multiple uplink candidate subframes.

By means of the above device, the second sending module 62 is configured to send configuration information to a base station, the configuration information including sending time-frequency position information of multiple uplink candidate subframes on an unlicensed carrier, and the multiple uplink candidate subframes being used for sending multiple pieces of UCI; the third sending module 64 is configured to send a downlink data block on the unlicensed carrier to the terminal; and the third receiving module 66 is configured to receive UCI corresponding to the downlink data block on the multiple uplink candidate subframes. The problem that uplink feedback of UCI may not be sent on an unlicensed carrier in time due to failure of an LBT operation is solved, so that the transmission efficiency of downlink data of an LTE system on the unlicensed carrier is improved.

In the embodiment of the disclosure, the sending time-frequency position information of the multiple uplink candidate subframes includes: spacing information of the multiple uplink candidate subframes, the spacing information including a number of spacing uplink subframes, and the spacing information indicating a time dimension spacing between an uplink sending time of the UCI and a receiving time of the downlink data block.

In the embodiment of the disclosure, in the presence of multiple activated unlicensed carriers, the sending time-frequency position information of the multiple uplink candidate subframes includes spacing information and frequency information of the multiple uplink candidate subframes, the spacing information including a number of spacing uplink subframes, the frequency information including an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

In the embodiment of the disclosure, the operation that configuration information is sent to a terminal includes the operation as follows.

The configuration information is sent to the terminal by a specific RRC message or an RRC message broadcast by a system.

In the embodiment of the disclosure, the third receiving module 66 is configured to receive UCI corresponding to the downlink data block on one of the multiple uplink candidate subframes, and determine UCI of candidate subframes among the plurality of uplink candidate subframes other than said one uplink candidate subframe according to UCI of said one uplink candidate subframe and sending time-frequency position information of the multiple uplink candidate subframes, the determined UCI carrying joint feedback UCI associated with the multiple downlink data blocks.

In the embodiment of the disclosure, after joint feedback UCI associated with the multiple downlink data blocks is received on the multiple candidate subframes, UCI associated with each downlink data block in the joint feedback UCI is derived according to physical layer control information, the UCI of each data block including: information indicating whether the downlink data block is successfully received, and CSI of an observation time window for channel reception corresponding to the downlink data block.

It is to be noted that each of the above modules may be implemented by software or hardware. For the latter, the foregoing may be implemented by, but not limited to, the following manners: the above modules are all located in the same processor; or, the above modules are respectively located in different processors.

The disclosure will now be described in detail in conjunction with the preferred embodiments and implementation manners.

When an LTE system works on an unlicensed carrier and a downlink data block is transmitted, the uplink UCI feedback of a UE may not be sent at a current predetermined n+4 subframe position (or other subframe positions agreed by the system) due to LBT regulation requirements, thereby causing that a base station fails to receive UCI feedback timely. A UCI feedback enhancement mechanism is introduced by the preferred embodiment of the disclosure, so that the base station can receive UCI feedback (reducing the UCI receiving delay) more timely, thereby improving the downlink data transmission efficiency of the LTE system on the unlicensed carrier.

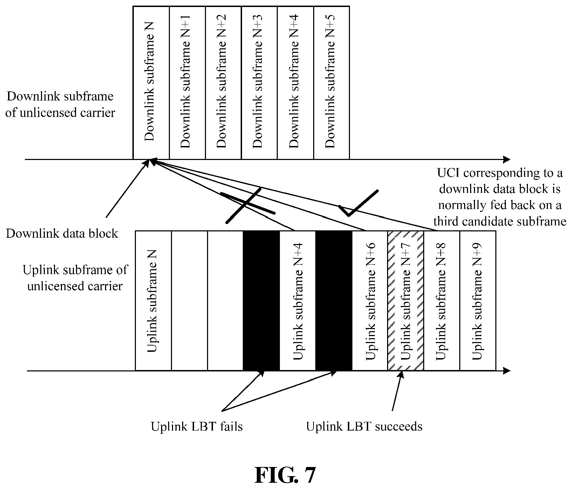

Under a scenario mainly oriented to a configuration of a single unlicensed carrier secondary serving cell, FIG. 7 is a schematic diagram of downlink scheduling transmission and enhanced same-frequency uplink feedback of an LAA system according to a preferred embodiment of the disclosure. As shown in FIG. 7, the implementation manner includes the following operations.

For a certain downlink data block on an unlicensed carrier, a network side configures multiple pieces of UCI sending subframe position information on the same unlicensed carrier to the UE or candidate subframe spacing information. The UE allows UCI uplink sending to be attempted at these multiple candidate subframe positions; after the UCI associated with a downlink data block is successfully sent, the UE does not need to repeatedly send the same UCI content on other candidate subframes.

The UE may perform joint feedback of UCI on multiple downlink data blocks in a certain candidate subframe at the same time, that is, the UCI in the same subframe includes joint feedback for multiple downlink data blocks received before and CSI measurement information of a longer observation time window for channel reception.

The network side attempts to receive the UCI feedback information at the multiple candidate subframe positions; the network side needs to be able to correctly associate the received UCI with each downlink data block.

The UCI sends subframe position information, or the candidate subframe spacing information describes a time dimension spacing between the uplink UCI feedback information and the corresponding downlink data block. The time dimension spacing may be described by a number of spacing subframes. For example, a current FDD system defaults to that the agreed number of time dimension spacing subframes is 4, and there may be more other values in the future.

The network side may configure the foregoing time dimension spacing information set for the UE by using a UE-specific RRC message or a system broadcast RRC message.

When the UE fails to successfully send UCI 1 at a certain candidate subframe position due to the failure of LBT, and then the UE continues to receive and parse several new downlink data blocks, thereby generating corresponding new pending UCI 2, so that the UE needs to attempt to jointly send UCI 1+2 at a next candidate subframe position. If the LBT fails again, and so on, the UE needs to attempt to jointly send UCI 1+2+3 at a next candidate subframe position.

Due to the limitation of the channel resource capacity in the PUSCH and PUCCH single sub-frames, the UCI joint feedback information cannot be accumulated indefinitely. Therefore, when the sub-frame capacity limit is exceeded, only a UCI set corresponding to the recently received downlink data block is fed back.

On the basis of the time dimension spacing set configured by an RRC high-level signaling, the network side may derive a corresponding association between each UCI feedback information and a specific downlink data block through physical layer control information, that is, the following can be extracted from the UCI joint feedback: ACK/NACK feedbacks with respect to downlink data blocks and a CSI measurement result within an observation time window, which correspond to UCI 1; and ACK/NACK feedbacks with respect to downlink data blocks and a CSI measurement result within an observation time window, which correspond to UCI 2.

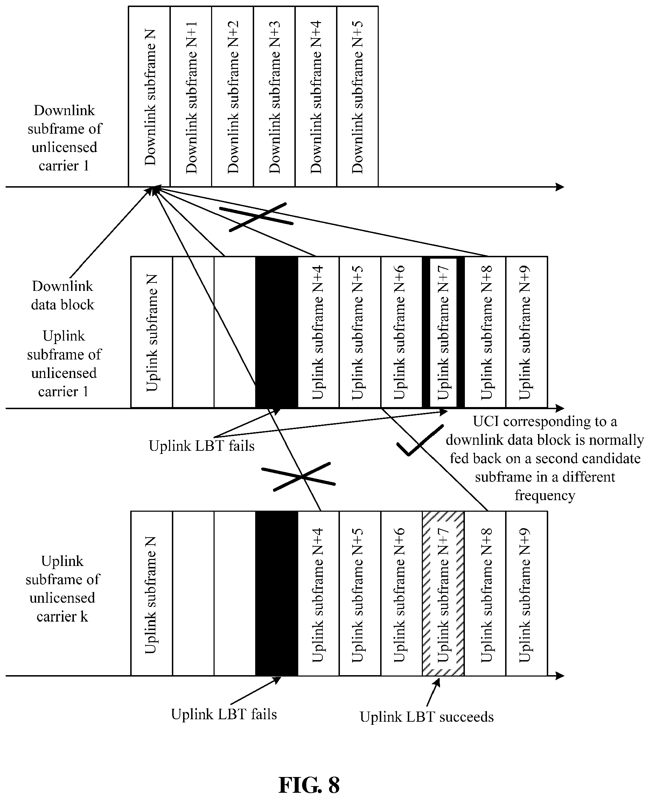

Under a scenario applied to configuration of multiple unlicensed carrier secondary serving cells, FIG. 8 is a schematic diagram of downlink scheduling transmission and enhanced multi-frequency uplink feedback of an LAA system according to a preferred embodiment of the disclosure. As shown in FIG. 8, the implementation manner includes:
If a network and a UE are configured at the same time and multiple unlicensed carriers are activated, for a certain downlink data block on an unlicensed carrier, a network side configures multiple pieces of UCI sending subframe position information or candidate subframe spacing information on different unlicensed carriers to the UE. The UE allows UCI uplink sending to be attempted at these multiple candidate subframe positions; after the UCI associated with a downlink data block is successfully sent (possibly different from sending carrier frequency points of the downlink data block, that is, different-frequency UCI feedback), the UE does not need to repeatedly send the same UCI content on other candidate subframes.

The UE may perform joint feedback of UCI on multiple downlink data blocks in a certain candidate subframe at the same time, that is, the UCI in the same subframe includes joint feedback for multiple downlink data blocks received from the multiple unlicensed carriers before and CSI measurement information of a longer observation time window for channel reception.

The network side attempts to receive the UCI feedback information at the multiple candidate subframe positions; the network side needs to be able to correctly associate the received UCI with each downlink data block, including a carrier frequency association and a subframe time association.

The UCI sends subframe position information, or the candidate subframe spacing information describes a frequency dimension spacing and a time dimension spacing between the uplink UCI feedback information and the corresponding downlink data block. The frequency dimension spacing may be described by an index of the unlicensed carrier secondary serving cell, and the time dimension spacing may be described by a number of spacing subframes. For example, the number of subframes in the time dimension spacing agreed by the current FDD system is 4; if the UCI feedback and the corresponding downlink data block are at the same unlicensed carrier frequency point, the frequency dimension spacing is 0; if they are at different unlicensed carrier frequency points, for example, the downlink data block is sent on the secondary serving cell index 2, the UCI is fed back in the uplink on the serving cell index 4, the frequency dimension spacing is 2.

The network side may configure the foregoing frequency dimension spacing and time dimension spacing information set for the UE by using a UE-specific RRC message or a system broadcast RRC message. The network side may configure different independent frequency dimension spacing sets and time dimension spacing sets for different unlicensed carrier secondary serving cells.

The UE preferably attempts to feed back the UCI on the same frequency as a downlink data packet. When the UE fails to successfully send UCI 1 at a certain candidate subframe position in the same frequency due to the failure of LBT, the UE immediately attempts to feed back UCI at other candidate subframe positions on the different frequency. If LBT/UCI feedback at all the candidate subframe positions on the inter-frequency fails, the UE returns to an original downlink data packet to attempt to feed back the UCI at the same frequency point. Then, the UE continues to receive and parse several new downlink data blocks, thereby generating corresponding new pending UCI 2, so that the UE needs to attempt to jointly send UCI 1+2 at a next candidate subframe position. The candidate subframe position for UCI feedback is selected as above. If the LBT fails again, and so on, the UE needs to attempt to jointly send UCI 1+2+3 at a next candidate subframe position.

Due to the limitation of the channel resource capacity in the PUSCH and PUCCH single sub-frames, the UCI joint feedback information cannot be accumulated indefinitely. Therefore, when the sub-frame capacity limit is exceeded, only a UCI set corresponding to the recently received downlink data block is fed back.

On the basis of the frequency dimension spacing and time dimension spacing set configured by an RRC high-level signaling, the network side may derive a corresponding association between each UCI feedback information and a specific downlink data block through physical layer control information, that is, the following can be extracted from the UCI joint feedback: ACK/NACK feedbacks with respect to downlink data blocks and a CSI measurement result within an observation time window, which correspond to UCI 1; and ACK/NACK feedbacks with respect to downlink data blocks and a CSI measurement result within an observation time window, which correspond to UCI 2.

### First Embodiment

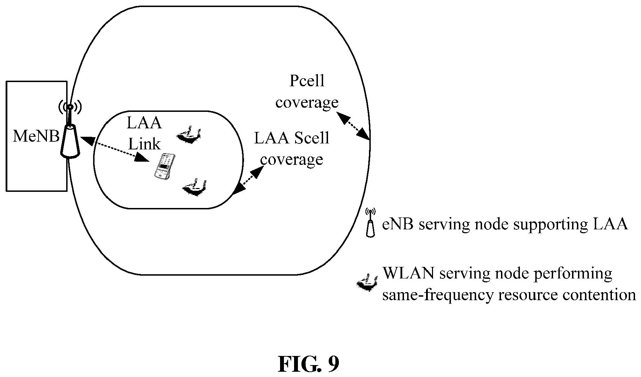

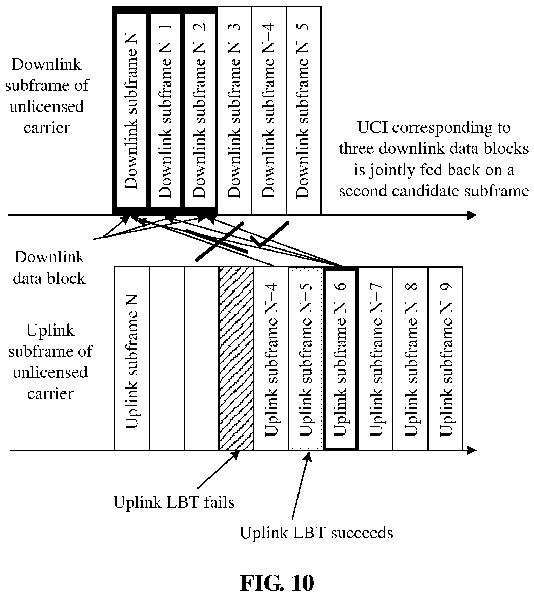

FIG. 9 is a deployment schematic diagram of a single LAA Scell on a Pcell+unlicensed carrier on an LAA licensed carrier according to a preferred embodiment of the disclosure. FIG. 10 is a schematic diagram of downlink scheduling transmission and uplink feedback of an LAA system according to a first preferred embodiment of the disclosure. As shown in FIG. 9 and FIG. 10, an operator deploys and utilizes an LAA technology, there is Pcell macro coverage on a licensed carrier, and there is an LAA Scell hotspot coverage on an unlicensed carrier. When a UE is in the common coverage of Pcell+LAA Scell, a primary base station MeNB configures the UE with an LAA operation for downlink data offloading, and performs self-carrier scheduling and UCI feedback on the LAA Scell. The UE capability supports Mode 1 of the disclosure. Since there are other WLAN nodes on the unlicensed carrier frequency point where the LAA Scell is located, they all need to compete for the local unlicensed carrier resources through the LBT. The specific implementation operations of the disclosure are as follows.

At operation 901, an MeNB configures a UE through RRC specific message RRC Connection Reconfiguration for LAA downlink data block transmission, and performs uplink feedback on UCI by using a Transmission Burst obtained by contention on an LAA Scell. A subframe time dimension spacing set for UCI feedback configured for the UE by the MeNB is {4, 6}, that is, corresponding to a downlink data block received at a subframe time N, the UE may send UCI at two uplink subframe positions N+4 and N+6.

At operation 902, the MeNB successfully contends for a certain Transmission Burst resource through an LBT operation, and the MeNB continuously schedules and sends three different data blocks on downlink subframes N, N+1, and N+2. The UE receives and parses the three different data blocks according to the normal timing, and performs CSI measurement at the same time, thereby generating corresponding UCI.

At operation 903, according to the configuration of the MeNB subframe time dimension spacing set {4, 6}, the UE first attempts to perform fast LBT operation before the uplink subframe N+4, but since the peripheral WLAN AP node of the UE is working and a local resource is occupied, the LBT of the UE fails. Thus, the fast LBT operation is performed again before the uplink subframe N+6. At this time, the peripheral WLAN AP node of the UE releases the occupied resources, so the LBT of the UE succeeds; the UE can perform uplink feedback on UCI at the uplink subframe N+6 position.

At operation 904, since UCI corresponding to the three data blocks sent on the downlink subframes N, N+1, and N+2 has not been fed back, the UE needs to jointly feed back three pieces of UCI at the uplink subframe N+6 position, and indicates the position relationship of the three pieces of UCI by using physical layer signaling, for example, indicating the MeNB that the current UCI joint feedback contains three pieces of UCI,

UCI 1, UCI2, and UCI3 in a chronological order.

At operation 905, after successfully receiving and parsing the UCI joint feedback information on the unlicensed carrier of the same frequency, the MeNB extracts UCI 1, UCI2, and UCI3 respectively, thereby knowing the data block receiving situations of downlink data sending at the positions of the preceding downlink subframes N, N+1, and N+2, and a CSI measurement of that period of time.

### Second Embodiment

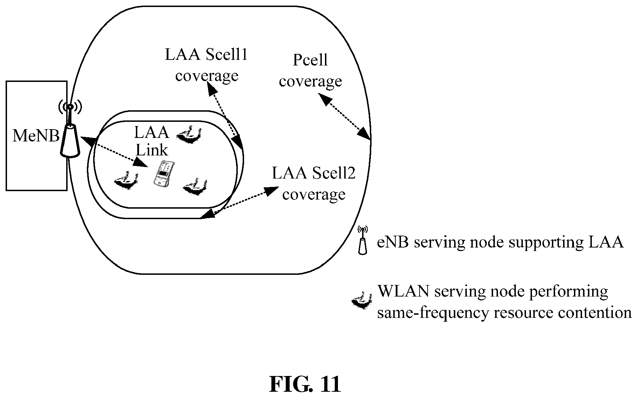

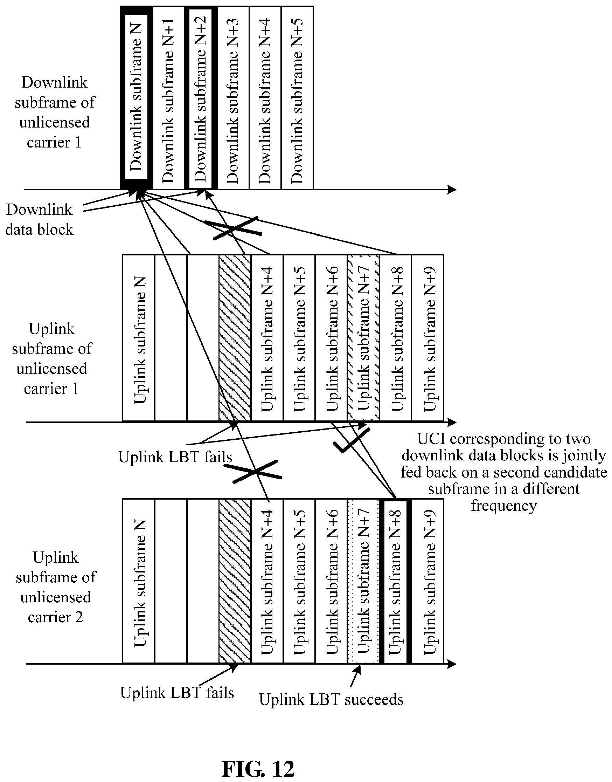

FIG. 11 is a first deployment schematic diagram of two LAA Scells on a Pcell+unlicensed carrier on an LAA licensed carrier according to a preferred embodiment of the disclosure. FIG. 12 is a schematic diagram of downlink scheduling transmission and uplink feedback of an LAA system according to a second preferred embodiment of the disclosure. As shown in FIG. 11 and FIG. 12, an operator deploys and utilizes an LAA technology, there is Pcell macro coverage on a licensed carrier, and two LAA Scell hotspots con an unlicensed carrier. When a UE is in the common coverage of Pcell+LAA Scell1+LAA Scell2, a primary base station MeNB configures the UE with an LAA operation for downlink data offloading, and performs self-carrier scheduling and UCI feedback on the LAA Scells. The UE capability supports Mode 2 of the disclosure. Since there are other WLAN nodes on the unlicensed carrier frequency point where the LAA Scells are located, they all need to compete for the local unlicensed carrier resources through the LBT. The specific implementation operations of the disclosure are as follows:
At operation 1101, an MeNB configures a UE through RRC specific message RRC Connection Reconfiguration for LAA downlink data block transmission, and performs uplink feedback on UCI by using a Transmission Burst obtained by contention on an LAA Scell1 and an LAA Scell2. A subframe frequency dimension spacing set for UCI feedback configured on the LAA Scell1 for the UE by the MeNB is {1, 2} (1, 2 is an index of an LAA Scell secondary cell), a time dimension spacing set is {4, 8}, that is, corresponding to a downlink data block received on the LAA Scell1 at a subframe time N, the UE may send UCI at two uplink subframe positions N+4 and N+8 of the LAA Scell1 and two uplink subframe positions N+4 and N+8 of the LAA Scell2. Moreover, a subframe frequency dimension spacing set for UCI feedback which may also be configured on the LAA Scell2 for the UE by the MeNB is {2, 1} (1, 2 is an index of an LAA Scell secondary cell), a time dimension spacing set is {2, 6}, that is, corresponding to a downlink data block received on the LAA Scell2 at a subframe time N, the UE may send UCI at two uplink subframe positions N+2 and N+6 of the LAA Scell2 and two uplink subframe positions N+2 and N+6 of the LAA Scell1.

At operation 1102, the MeNB successfully contends for a certain Transmission Burst resource through an LBT operation, and the MeNB respectively schedules and sends two different data blocks on downlink subframes N and N+2 of the LAA Scelll. The UE receives and parses the two different data blocks according to the normal timing, and performs CSI measurement at the same time, thereby generating corresponding UCI.

At operation 1103, according to the configuration of the subframe frequency dimension spacing set {1, 2} and the subframe time dimension spacing set {4, 8} of the LAA Scelll by the MeNB, the UE first simultaneously attempts to perform fast LBT operation before the uplink subframe N+4 on the LAA Scelll and the LAA Scell2, but since the peripheral WLAN APs node of the UE is working and a local resource is occupied, the LBT of the UE fails. Thus, the fast LBT operation is performed again before the uplink subframe N+8 on the LAA Scelll and the LAA Scell2. At this time, some of the peripheral WLAN AP nodes of the UE release the occupied resources, so the LBT of the UE succeeds on the LAA Scell2; the UE can perform uplink feedback on UCI at the uplink subframe N+8 position on the LAA Scell2.

At operation 1104, since UCI corresponding to the two data blocks sent by the downlink subframes N and N+2 on the LAA Scelll has not been fed back, the UE needs to jointly feed back two pieces of UCI at the uplink subframe N+8 position on the LAA Scell2, and indicates the position relationship of the two pieces of UCI by using physical layer signaling, for example, indicating the MeNB that the current UCI joint feedback contains two pieces of UCI, both for the LAA Scelll, namely UCI 1 and UCI2 in a chronological order.

At operation 1105, after successfully receiving and parsing the UCI joint feedback information on the LAA Scell2 of the unlicensed carrier in a different frequency, the MeNB extracts UCI 1 and UCI2 respectively, thereby knowing the data block receiving situations of downlink data sending at the positions of the preceding downlink subframes N and N+2 on the LAA Scelll, and a CSI measurement of that period of time.

### Third Embodiment

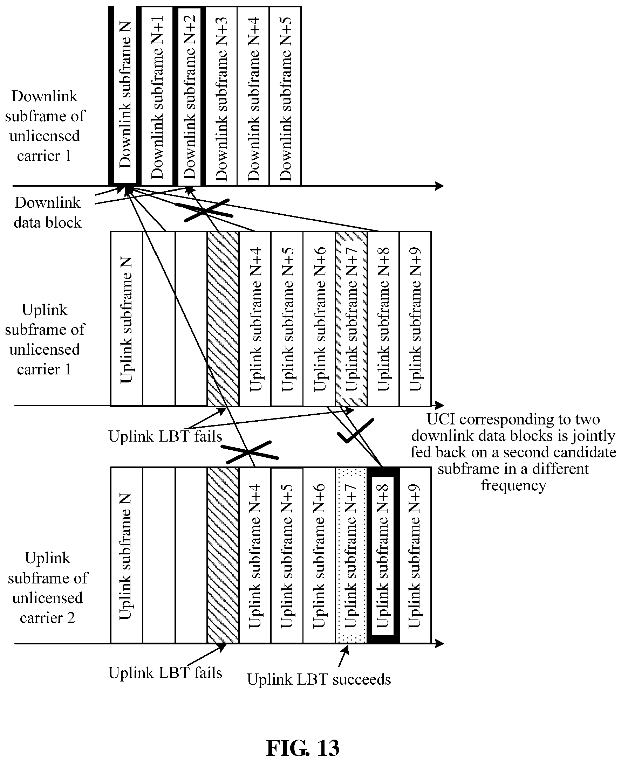

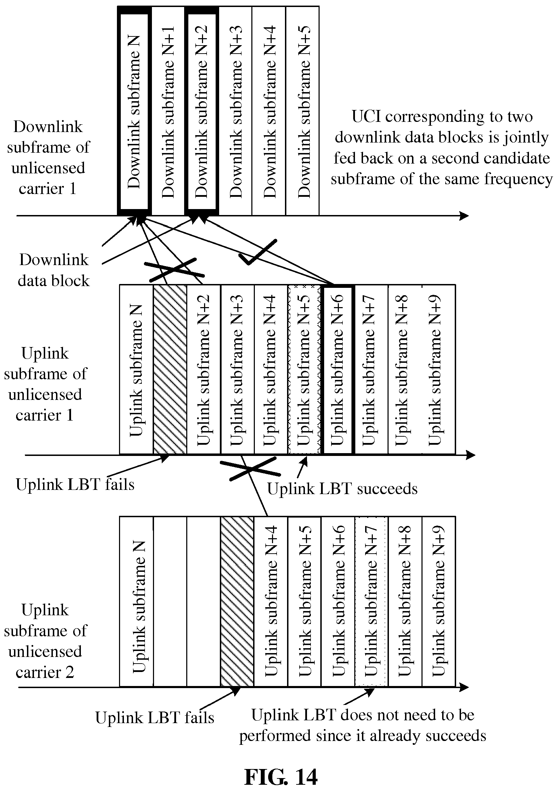

FIG. 13 is a second deployment schematic diagram of two LAA Scells on a Pcell+unlicensed carrier on an LAA licensed carrier according to a preferred embodiment of the disclosure. FIG. 14 is a schematic diagram of downlink scheduling transmission and enhanced multi-frequency uplink feedback of an LAA system according to a third preferred embodiment of the disclosure. As shown in FIG. 13 and FIG. 14, an operator deploys and utilizes an LAA-DC technology, there is Pcell macro coverage on a licensed carrier of an MeNB, an LAA-SeNB is connected to a far end through X2, two LAA Scells are deployed on the unlicensed carrier for hotspot capacity enhancement. When a UE is in the common coverage of Pcell+LAA Scell1+LAA Scell2, a primary base station MeNB configures the UE with an LAA-DC operation for downlink data offloading, and the UE may simultaneously perform downlink data sending and receiving on an LAA MCG-link and an LAA SCG-link. The LAA-SeNB performs self-carrier scheduling and UCI feedback on LAA Scells. The UE capability supports Mode 2 of the disclosure. Since there are other WLAN nodes on the unlicensed carrier frequency point where the LAA Scells are located, they all need to compete for the local unlicensed carrier resources through the LBT. The specific implementation operations of the disclosure are as follows.

At operation 1301, an MeNB configures a UE through RRC message RRC Connection Reconfiguration for an LAA-DC dual-connection operation, shunt transmission is performed on a downlink data block at an LAA-SCG side, and the LAA-SeNB performs uplink feedback on UCI by using a Transmission Burst obtained by contention on an LAA Scelll and an LAA Scell2. A subframe frequency dimension spacing set for UCI feedback configured on the LAA Scelll for the UE by the MeNB is {1, 2} (1, 2 is an index of an LAA Scell secondary cell), a time dimension spacing set is {2, 6} and {4, 8}, that is, corresponding to a downlink data block received on the LAA Scelll at a subframe time N, the UE may send UCI at two uplink subframe positions N+4 and N+8 of the LAA Scelll and two uplink subframe positions N+4 and N+8 of the LAA Scell2. Moreover, a subframe frequency dimension spacing set for UCI feedback which may also be configured on the LAA Scell2 for the UE by the MeNB is {2, 1} (1, 2 is an index of an LAA Scell secondary cell), a time dimension spacing set is {2, 6} and {4, 8}, that is, corresponding to a downlink data block received on the LAA Scell2 at a subframe time N, the UE may send UCI at two uplink subframe positions N+2 and N+6 of the LAA Scell2 and two uplink subframe positions N+4 and N+8 of the LAA Scelll.

At operation 1302, the LAA-SeNB successfully contends for a certain Transmission Burst resource through an LBT operation, and the LAA-SeNB respectively schedules and sends two different data blocks on downlink subframes N and N+2 of the LAA Scelll. The UE receives and parses the two different data blocks according to the normal timing, and performs CSI measurement at the same time, thereby generating corresponding UCI.

At operation 1303, according to the configuration of the subframe frequency dimension spacing set {1, 2} and the subframe time dimension spacing set {2, 6} and {4, 8} of the LAA Scelll by the MeNB, the UE first simultaneously attempts to perform fast LBT operation before the uplink subframe N+2 on the LAA Scelll and the uplink subframe N+4 on the LAA Scell2, but since the peripheral WLAN APs node of the UE is working and a local resource is occupied, the LBT of the UE fails. Thus, the fast LBT operation is performed again before the uplink subframe N+6 on the LAA Scelll and the uplink subframe N+8 on the LAA Scell2. At this time, some of the peripheral WLAN AP nodes of the UE release the occupied resources, so the LBT of the UE succeeds on the LAA Scelll; the UE can perform uplink feedback on UCI at the uplink subframe N+6 position on the LAA Scelll.

At operation 1304, since UCI corresponding to the two data blocks sent by the downlink subframes N and N+2 on the LAA Scelll has not been fed back, the UE needs to jointly feed back two pieces of UCI at the uplink subframe N+6 position on the LAA Scelll, and indicates the position relationship of the two pieces of UCI by using physical layer signaling, for example, indicating the LAA-SeNB that the current UCI joint feedback contains two pieces of UCI, both for the LAA Scelll, namely UCI 1 and UCI2 in a chronological order.

At operation 1305, after successfully receiving and parsing the UCI joint feedback information on the LAA Scelll of the unlicensed carrier of the same frequency, the LAA-SeNB extracts UCI 1 and UCI2 respectively, thereby knowing the data block receiving situations of downlink data sending at the positions of the preceding downlink subframes N and N+2 on the LAA Scelll, and a CSI measurement of that period of time.

Through the description of the above implementation manners, those skilled in the art can clearly understand that the method according to the above embodiment can be implemented by means of software plus a necessary general hardware platform, and of course, can also be implemented through hardware, but in many cases, the former is a better implementation. Based on such understanding, the technical solution of the disclosure, which is essential to or partially contributes to the conventional art, may be embodied in the form of a software product. The computer software product is stored in a storage medium (such as a Read-Only Memory (ROM) or a Random Access Memory (RAM), a magnetic disk and an optical disc), including a plurality of instructions used to cause a terminal device (which may be a mobile phone, a computer, a server, or network device, etc.) to perform the method in each embodiment of the disclosure.

The embodiment of the disclosure also provides a storage medium. Alternatively, in the present embodiment, the storage medium may be configured to store a program code for performing the operations as follows.

At S1, configuration information sent from a base station is received, the configuration information including sending time-frequency position information of multiple uplink candidate subframes on an unlicensed carrier, and the multiple uplink candidate subframes being used for sending multiple pieces of UCI.

At S2, a downlink data block on the unlicensed carrier is received, and UCI corresponding to the downlink data block is sent on the multiple uplink candidate subframes.

Alternatively, the storage medium is also configured to store a program code for performing the method steps of the above embodiment as follows.

Alternatively, in the present embodiment, the storage medium may include, but is not limited to, various media capable of storing program codes such as a USB flash drive, a ROM, a RAM, a mobile hard disk, a magnetic disk or an optical disc.

Alternatively, in the present embodiment, the processor performs the method steps of the above embodiments according to the stored program codes in the storage medium.

Alternatively, the specific examples in the present embodiment may refer to the examples described in the above embodiments and the alternative implementation manners, and details are not described herein in the present embodiment again.

It is apparent that those skilled in the art should understand that all modules or all steps of the disclosure can be realized by using a generic computation device, can be centralized on a single computation device or can be distributed on a network composed of a plurality of computation devices. Alternatively, they can be realized by using executable program codes of the computation devices. Thus, they can be stored in a storage device and executed by the computation devices, the shown or described steps can be executed in a sequence different from this sequence under certain conditions, or they are manufactured into each integrated circuit module respectively, or a plurality of modules or steps therein are manufactured into a single integrated circuit module. Thus, the disclosure is not limited to a combination of any specific hardware and software.

The above is only a preferred embodiment of the disclosure, and is not intended to limit the disclosure, and those skilled in the art can make various modifications and changes on the disclosure. Any modifications, equivalent replacements, improvements and the like made within the spirit and principle of the disclosure are intended to be included within the scope of protection of the disclosure.

### INDUSTRIAL APPLICABILITY

By means of the embodiment of the disclosure, configuration information sent by a base station is received, the configuration information including sending time-frequency position information of multiple uplink candidate subframes on an unlicensed carrier, and the multiple uplink candidate subframes being used for sending multiple pieces of UCI; and a downlink data block on the unlicensed carrier is received, and UCI corresponding to the downlink data block is sent on the multiple uplink candidate subframes. The problem that uplink feedback of UCI may not be sent on an unlicensed carrier in time due to failure of an LBT operation is solved, so that the transmission efficiency of downlink data of an LTE system on the unlicensed carrier is improved.

## Claims

1. A method for transmitting uplink feedback information, comprising:
receiving configuration information sent from a base station, the configuration information comprising sending time-frequency position information of a plurality of uplink candidate subframes on an unlicensed carrier, and the plurality of uplink candidate subframes being used for sending a plurality of pieces of Uplink Control Information, UCI; and
receiving a downlink data block on the unlicensed carrier, and sending UCI corresponding to the downlink data block on the plurality of uplink candidate subframes.

2. The method according to claim 1, wherein the sending time-frequency position information of the plurality of uplink candidate subframes comprises spacing information of the plurality of candidate subframes, the spacing information comprising a number of spacing uplink subframes, and the spacing information indicating a time dimension spacing between an uplink sending time of the UCI and a receiving time of the downlink data block.

3. The method according to claim 1, wherein
in the presence of a plurality of activated unlicensed carriers, the sending time-frequency position information of the plurality of uplink candidate subframes comprises spacing information and frequency information of the plurality of uplink candidate subframes, the spacing information comprising a number of spacing uplink subframes, the frequency information comprising an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

4. The method according to claim 3, wherein sending UCI corresponding to the downlink data block on the plurality of uplink candidate subframes comprises:
uplinking the UCI corresponding to the downlink data block preferentially on an uplink candidate subframe that is in a same frequency as the downlink data block; and
in the case when the UCI corresponding to the downlink data block cannot be uplinked due to a failure of Listen Before Talk, LBT, after an attempt of uplinking the UCI on the uplink candidate subframe that is in the same frequency as the downlink data block, uplinking the UCI corresponding to the downlink data block on an uplink candidate subframe that is in a different frequency from the downlink data block.

5. The method according to claim 1, further comprising:
attempting to send the UCI corresponding to the downlink data block on one of the plurality of uplink candidate subframes, wherein after the UCI is successfully sent on the uplink candidate subframe, the UCI is not required to be repeatedly send on uplink candidate subframes among the configured plurality of uplink candidate subframes other than the uplink candidate subframe on which the UCI is successfully sent.

6. The method according to claim 1, wherein after receiving the downlink data block on the unlicensed carrier, the method further comprises:
uplinking joint feedback UCI associated with a plurality of downlink data blocks on the plurality of uplink candidate subframes simultaneously, the joint feedback UCI comprising: joint feedback information indicating whether the plurality of downlink data blocks are successfully received, and Channel State Information, CSI, associated with an observation time window for channel reception corresponding to the plurality of downlink data blocks.

7. The method according to claim 6, wherein
after an attempt of sending first one or more pieces of UCI of the UCI corresponding to the plurality of downlink data blocks fails due to a failure of Listen Before Talk, LBT, a subsequent UCI of the first one or more pieces of UCI is jointly uplinked as the joint feedback UCI, and the joint feedback UCI carries information of the first one or more pieces of UCI, wherein a coding mode of the joint feedback UCI comprising a plurality of pieces of UCI is a carrier aggregation joint UCI coding mode.

8. The method according to claim 6, wherein
in the case when the feedback information of the joint feedback UCI exceeds a capacity of an uplink subframe where the joint feedback UCI is located, the joint feedback UCI carries one or more pieces of UCI corresponding to recently received one or more downlink data blocks, and UCI corresponding to downlink data blocks other than the recently received one or more downlink data blocks is discarded.

9. The method according to claim 1, wherein the configuration information is carried in a specific Radio Resource Control, RRC, message or an RRC message broadcast by a system.

10. A method for transmitting uplink feedback information, comprising:
sending configuration information to a terminal, the configuration information comprising sending time-frequency position information of a plurality of uplink candidate subframes on an unlicensed carrier, and the plurality of uplink candidate subframes being used for sending a plurality of pieces of Uplink Control Information, UCI;
sending a downlink data block on the unlicensed carrier to the terminal; and
receiving UCI corresponding to the downlink data block on the plurality of uplink candidate subframes.

11. The method according to claim 10, wherein the sending time-frequency position information of the plurality of uplink candidate subframes comprises: spacing information of the plurality of uplink candidate subframes, the spacing information comprising a number of spacing uplink subframes, and the spacing information indicating a time dimension spacing between an uplink sending time of the UCI and a receiving time of the downlink data block.

12. The method according to claim 10, wherein
in the presence of a plurality of activated unlicensed carriers, the sending time-frequency position information of the plurality of uplink candidate subframes comprises spacing information and frequency information of the plurality of uplink candidate subframes, the spacing information comprising a number of spacing uplink subframes, the frequency information comprising an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

13. The method according to claim 10, wherein sending configuration information to a terminal comprises:
sending the configuration information to the terminal by a specific Radio Resource Control, RRC, message or an RRC message broadcast by a system.

14. The method according to claim 10, wherein receiving the UCI corresponding to the downlink data block comprises:
receiving the UCI corresponding to the downlink data block on one of the plurality of uplink candidate subframes, and determining UCI of candidate subframes among the plurality of uplink candidate subframes other than said one uplink candidate subframe according to UCI of said one uplink candidate subframe and sending time-frequency position information of the plurality of uplink candidate subframes, the determined UCI carrying joint feedback UCI associated with the plurality of downlink data blocks.

15. The method according to claim 14, wherein
after the joint feedback UCI associated with the plurality of downlink data blocks is received on the plurality of candidate subframes, deriving UCI associated with each downlink data block in the joint feedback UCI according to physical layer control information, the UCI of each downlink data block comprising: information indicating whether the downlink data block is successfully received, and Channel State Information, CSI, of an observation time window for channel reception corresponding to the downlink data block.

16. A device for transmitting uplink feedback information, located in a terminal, comprising:
a first receiving module, configured to receive configuration information sent from a base station, the configuration information comprising sending time-frequency position information of a plurality of uplink candidate subframes on an unlicensed carrier, and the plurality of uplink candidate subframes being used for sending a plurality of pieces of Uplink Control Information, UCI;
a second receiving module, configured to receive a downlink data block on the unlicensed carrier; and
a first sending module, configured to uplink UCI corresponding to the downlink data block on the plurality of uplink candidate subframes.

17. The device according to claim 16, wherein the sending time-frequency position information of the plurality of uplink candidate subframes comprises spacing information of the plurality of candidate subframes, the spacing information comprising a number of spacing uplink subframes, and the spacing information indicating a time dimension spacing between an uplink sending time of the UCI and a receiving time of the downlink data block.

18. The device according to claim 16, wherein
in the presence of a plurality of activated unlicensed carriers, the sending time-frequency position information of the plurality of uplink candidate subframes comprises spacing information and frequency information of the plurality of uplink candidate subframes, the spacing information comprising a number of spacing uplink subframes, the frequency information comprising an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

19. The device according to claim 18, wherein
the first sending module is further configured to the uplink UCI corresponding to the downlink data block preferentially on an uplink candidate subframe that is in a same frequency as the downlink data block; and
the first sending module is further configured to, in the case when UCI corresponding to the downlink data block cannot be uplinked on an uplink candidate subframe that is in a same frequency as the downlink data block after the attempt due to failure of Listen Before Talk, LBT, uplink the UCI corresponding to the downlink data block on an uplink candidate subframe that is in the different frequency from the downlink data block.

20. The device according to claim 16, wherein
the first sending module is further configured to attempt to send the UCI corresponding to the downlink data block on one of the plurality of uplink candidate subframes, wherein after the UCI is successfully sent on the uplink candidate subframe, the UCI is not required to be repeatedly send on uplink candidate subframes among the configured plurality of uplink candidate subframes other than the uplink candidate subframe on which the UCI is successfully sent.

21. The device according to claim 16, wherein
the first sending module is further configured to uplink joint feedback UCI associated with the plurality of downlink data blocks on the plurality of uplink candidate subframes simultaneously, the joint feedback UCI comprising: joint feedback information indicating whether the plurality of downlink data blocks are successfully received, and Channel State Information, CSI, associated with an observation time window for channel reception corresponding to the plurality of downlink data blocks.

22. The device according to claim 21, wherein
the first sending module is further configured to, after an attempt of sending first one or more pieces of UCI of the UCI corresponding to the plurality of downlink data blocks fails due to a failure of Listen Before Talk, LBT, allow a subsequent UCI of the first one or more pieces of UCI to be jointly uplinked as the joint feedback UCI, the joint feedback UCI carrying information of the first one or more pieces of UCI, wherein a coding mode of the joint feedback UCI comprising a plurality of pieces of UCI is a carrier aggregation joint UCI coding mode.

23. The device according to claim 22, wherein
in the case when the feedback information of the joint feedback UCI exceeds a capacity of an uplink subframe where the joint feedback UCI is located, the joint feedback UCI carries one or more pieces of UCI corresponding to recently received one or more downlink data blocks, and UCI corresponding to downlink data blocks other than the recently received one or more downlink data blocks is automatically discarded.

24. The device according to claim 16, wherein the configuration information is carried in a specific Radio Resource Control, RRC, message or an RRC message broadcast by a system.

25. A device for transmitting uplink feedback information, located in a base station, comprising:
a second sending module, configured to send configuration information to a terminal, the configuration information comprising sending time-frequency position information of a plurality of uplink candidate subframes on an unlicensed carrier, and the plurality of uplink candidate subframes being used for sending a plurality of pieces of Uplink Control Information, UCI;
a third sending module, configured to send a downlink data block on the unlicensed carrier to the terminal; and
a third receiving module, configured to receive UCI corresponding to the downlink data block on the plurality of uplink candidate subframes.

26. The device according to claim 25, wherein the sending time-frequency position information of the plurality of uplink candidate subframes comprises: spacing information of the plurality of uplink candidate subframes, the spacing information comprising a number of spacing uplink subframes, and the spacing information indicating a time dimension spacing between an uplink sending time of the UCI and a receiving time of the downlink data block.

27. The device according to claim 25, wherein
in the presence of a plurality of activated unlicensed carriers, the sending time-frequency position information of the plurality of uplink candidate subframes comprises spacing information and frequency information of the plurality of uplink candidate subframes, the spacing information comprising a number of spacing uplink subframes, the frequency information comprising an index of an unlicensed carrier secondary serving cell, the spacing information indicating a time dimension spacing between an uplink sending time of the UCI and a receiving time of the downlink data block, and the frequency information indicating a frequency dimension spacing between an uplink sending frequency or secondary serving cell of the UCI and a receiving frequency or secondary serving cell of the downlink data block.

28. The device according to claim 25, wherein the operation of sending configuration information to a terminal comprises:
sending the configuration information to the terminal by a specific Radio Resource Control, RRC, message or an RRC message broadcast by a system.

29. The device according to claim 25, wherein
the third receiving module is further configured to receive the UCI corresponding to the downlink data block on one of the plurality of uplink candidate subframes, and determine UCI of candidate subframes among the plurality of uplink candidate subframes other than said one uplink candidate subframe according to UCI of said one uplink candidate subframe and sending time-frequency position information of the plurality of uplink candidate subframes, the determined UCI carrying joint feedback UCI associated with the plurality of downlink data blocks.

30. The device according to claim 29, wherein
after joint feedback UCI associated with the plurality of downlink data blocks is received on the plurality of candidate subframes, deriving UCI associated with each downlink data block in the joint feedback UCI according to physical layer control information, the UCI of each data block comprising: information indicating whether the downlink data block is successfully received, and Channel State Information, CSI, of an observation time window for channel reception corresponding to the downlink data block.
